# EUROPEAN PATENT SPECIFICATION

(11) **EP 2 884 687 B1**
(45) Date of publication and mention of the grant of the patent: **03.07.2019**
(21) Application number: 13829515.9
(22) Date of filing: 12.08.2013
(51) Int. Cl.: H04L 5/00, H04J 3/16, H04J 14/02

(54) **METHOD AND DEVICE FOR DATA MAPPING IN OPTICAL TRANSPORT NETWORK**
VERFAHREN UND VORRICHTUNG ZUR DATENABBILDUNG IN EINEM OPTISCHEN TRANSPORTNETZ
PROCÉDÉ ET DISPOSITIF POUR LA MISE EN CORRESPONDANCE DE DONNÉES DANS UN RÉSEAU DE TRANSPORT OPTIQUE

(30) Priority: 13.08.2012 CN 201210286728
(43) Date of publication of application: 17.06.2015
(73) Proprietor: ZTE Corporation, Shenzhen, Guangdong 518057 (CN)
(72) Inventor: FU, Xihua, Shenzhen Guangdong 518057 (CN); ZHANG, Xinling, Shenzhen Guangdong 518057 (CN)
(74) Representative: Carangelo, Pierluigi
(86) International application number: PCT/CN2013/081269
(87) International publication number: WO 2014/026576

(56) References cited:
- EP-A1- 2 958 252
- EP-A1- 2 958 256
- EP-A1- 2 958 261
- EP-A2- 2 768 169
- CN-A- 101 902 275
- CN-A- 102 349 310
- JP-A- 2011 176 695
- GHANI ABBAS ET AL: "Enhanced Optical Transport Network standards", HIGH-CAPACITY OPTICAL NETWORKS AND ENABLING TECHNOLOGIES (HONET), 2010, IEEE, 19 December 2010 (2010-12-19), pages 22-25, XP031979317, DOI: 10.1109/HONET.2010.5715757 ISBN: 978-1-4244-9922-9
- BONAVENTURA G ET AL: "Optical transport network evolution: hot standardization topics in ITU-T including standards coordination aspects", IEEE COMMUNICATIONS MAGAZINE, IEEE SERVICE CENTER, PISCATAWAY, US, vol. 46, no. 10, 1 October 2008 (2008-10-01), pages 124-131, XP011236269, ISSN: 0163-6804, DOI: 10.1109/MCOM.2008.4644129
- "ITU-T Handbook Optical Transport Networks from TDM to Packet Chapter 2 - Frame structures, mapping and multiplexing", ITU-T DRAFT ; STUDY PERIOD 2009-2012, INTERNATIONAL TELECOMMUNICATION UNION, GENEVA ; CH, 10 October 2010 (2010-10-10), pages 1-30, XP044039031, [retrieved on 2010-10-10]

## Description

### Technical Field

The invention relates to the communication field and more particularly to a method and device for mapping data in an optical transport network.

### Background

The development of optical transmission technology reveals a trend towards a higher rate on a single channel (e.g. a rate of 400G/1T on a single channel), a higher spectral efficiency and a high-order modulation format, thus, the most clear and important development direction of optical transmission technology still lies in increasing transmission rate. High-speed transmission confronts a lot of limitations mainly in two aspects: aspect 1: optical transmission technology is developing towards convergence transmission of high spectral efficiency and high-speed service interface transmission, if spectral efficiency cannot be improved any longer, then the convergence of low speed services to a high-speed channel for transmission is not much meaningful, nonetheless, there may be a high-speed Ethernet interface at a client side, the transmission of a high-speed interface still needs to be taken into consideration, thus, 400G will be the critical point of the limit of spectral efficiency; aspect 2: as optical transmission technology is developing towards long-distance (long span and multi-span) transmission, the use of a low-loss fiber and a low-noise amplifier, the shortening of spans and the application of other approaches, although capable of partly improving the Optical Signal-Noise Ratio (OSNR) of a system, cannot make a breakthrough, in addition, it is difficult to implement these approaches in engineering.

With the bandwidth of a bearer network required to be higher and higher, a beyond-100G technology becomes a solution to the requirement for higher bandwidth; the Wavelength Division Multiplexing (WDM) of the conventional 50GHz fixed grid cannot provide a sufficient spectrum width to realize a beyond-100G technology, no matter a 400G technology or a 1T technology. In view of the defects in the fixed grid, a wider flexible grid is needed.

In related technologies, beyond-100G multi-speed hybrid transmission and the flexibility of the modulation format for beyond-100G transmission have different requirement on channel bandwidth, if a proper bandwidth is customized for each channel, then the bandwidth of a system can be fully used, thereby generating a flexible grid system. The requirement for a an ultra high-speed WDM system brought by the demand for higher and higher bandwidth leads to a demand for a flexible grid technology, however, how to effectively plan and manage frequency spectrum and how to realize the compatibility of the introduced flexible grid technology to existing systems remain to be solved.

As to how to effectively plan and manage frequency spectrum, for example, how to get rid of the limitation to the selection of a fixed rate for beyond-100G transmission, after a flexible grid technology is introduced in related technologies, no effective solution have been proposed.

The documents "GHANI ABBAS ET AL: Enhanced Optical Transport Network standards', HIGH-CAPACITY OPTICAL NETWORKS AND ENABLING TECHNOLOGIES (HONET), 2010, IEEE, 19 December 2010 (2010-12-19), pages 22-25, XP031979317" discloses that the continued exponential growth of packet based network traffic has necessitated the upgrading of the networking infrastructure that operates at the date line rates of 40/100 Gbs; the documents "BONAVENTURA G ET AL: 'Optical transport network evolution: hot standardization topics in ITU-T including standards coordination aspects', IEEE COMMUNICATIONS MAGAZINE, IEEE SERVICE CENTER, PISCATAWAY, US, vol. 46, no. 10, 1 October 2008 (2008-10-01), pages 124-131, XP011236269" discloses that the dramatic increase in capacity of telecommunication networks since the mid-1970s have been enabled by the introduction of light-wave systems for transmission; and the documents " 'ITU-T Handbook Optical Transport Networks from TDM to Packet Chapter 2-Frame structures, mapping and multiplexing', ITU-T DRAFT;STUDY PERIOD 2009-2012, INTERNATIONAL TELECOMMUNICATION UNION, GENEVA;CH, 10 October 2010 (2010-10-10), pages 1-30, XP044039031" describes the framing structures, overhead, and mapping/multiplexing specific to Optical Transport Hierarchy and Network (OTH. OTN). However, the above mentioned problem still remains unsolved.

### Summary of the Invention

The invention provides a data transmission scheme for an optical transport network so as to at least address the problem that it is unsolved how to effectively plan and manage frequency spectrum after a flexible grid technology is introduced to related art.

According to one aspect of the present invention, a method for mapping data in an optical transport network is provided, including: mapping packet service data to a Super Optical Channel Data Unit (ODUS) and mapping the ODUS to a Super Optical Channel Transport Unit (OTUS); and mapping the OTUS to a Super Optical Channel (OChS), wherein rates of the ODUS, the OTUS and the OChS are all N times of 100Gbit/s, a tributary slot size of the ODUS is 100Gbit/s, and N is a positive integer equal to or greater than 2.

Preferably, mapping the packet service data to the ODUS and mapping the ODUS to the OTUS includes: multiplexing an ODU4 bearing a low-order optical channel data unit (ODUk) or the packet service data, and the ODUS which is low-order and bears the packet service data into the ODUS with high-order, wherein the ODUk at least includes one of: an ODUO, an ODU1, an ODU2, an ODU2e, an ODU3 and an ODUflex; and mapping the high-order ODUS to the OTUS.

Preferably, mapping the ODUS to the OTUS and mapping the OTUS to the OChS includes: inversely multiplexing the ODUS into a plurality of Super Optical Channel Data Units (ODUSi); mapping the ODUSi into corresponding Super Optical Channel Transport Units (OTUSi), respectively; and mapping the OTUSi into corresponding Super Optical Channels (OChSi), wherein rates of the ODUSi, the OTUSi and the OChSi are all M times of 100Gbit/s, i is a positive integer, and M is a positive integer equal to and greater than 1 but smaller than N.

Preferably, the overhead byte of each of the ODUSi includes a number of a data slice born, wherein the number is for a receiving terminal to align and reassemble data of the ODUS.

Preferably, rate levels of the ODUSi are all the same or all different.

Preferably, mapping the ODUS to the OTUS and mapping the OTUS to the OChS includes: directly inversely multiplexing the ODUS into a plurality of OTUSi; and mapping the OTUSi into corresponding OChSi, wherein rates of the OTUSi and the OChSi are both M times of 100Gbit/s, i is a positive integer, and M is a positive integer equal to and greater than 1 but smaller than N.

Preferably, a overhead byte of each of the OTUSi includes a number of the data slice born, wherein the number is for a receiving terminal to align and reassemble the data of the ODUS.

Preferably, rate levels of the OTUSi are all the same or all different.

Preferably, after the OTUSi are mapped to the OChSi, the method further includes: bearing the data in each of the OChSi on certain contiguous frequency slots for transmission.

Preferably, after the OTUS is mapped to the OChS, the method further includes: modulating the OChS on a single optical carrier or multiple optical carriers for transmission.

According to another aspect of the present invention, a device for mapping data in an optical transport network is provided, including: a pre-processing component configured to map packet service data to an ODUS; and a mapping component configured to map the ODUS to an OTUS and map the OTUS to an OChS, wherein rates of the ODUS, the OTUS and the OChS are all N times of 100Gbit/s, the tributary slot size of the ODUS is 100Gbit/s, and N is a positive integer equal to or greater than 2.

Preferably, the pre-processing component includes a combination unit configured to multiplex an ODU4 bearing a low-order ODUk or the packet service data, and the ODUS with a low-order bearing the packet service data into the ODUS with a high-order, wherein the ODUk at least includes one of: an ODUO, an ODU1, an ODU2, an ODU2e, an ODU3 and an ODUflex; and the mapping component includes a first mapping unit configured to map the ODUS with the high-order to an OTUS and map the OTUS to an OChS.

Preferably, the mapping component further includes: a first inverse multiplexing unit configured to inversely multiplex the ODUS into a plurality of ODUSi; and a second mapping unit configured to map the ODUSi into corresponding OTUSi and map the OTUSi to corresponding OChSi, wherein rates of the ODUSi, the OTUSi and the OChSi are all M times of 100Gbit/s, i is a positive integer, and M is a positive integer equal to and greater than 1 but smaller than N.

Preferably, the mapping component further includes: a second inverse multiplexing unit configured to directly inversely multiplex the ODUS into a plurality of OTUSi; and a third mapping unit configured to map the OTUSi to corresponding OChSi, wherein rates of the OTUSi and the OChSi are both M times of 100Gbit/s, i is a positive integer, and M is a positive integer equal to and greater than 1 but smaller than N.

By mapping packet service data to an ODUS the rate of which is twice or more times of 100Gbit/s, mapping the ODUS to an OTUS and mapping the OTUS to an OChS, the invention addresses the problem that it is unsolved how to effectively plan and manage frequency spectrum after a flexible grid technology is introduced in related technologies, enabling an operator to deploy a beyond-100G optical transmission system more flexibly without being limited to select a fixed rate for the beyond-100G transmission and improving the spectrum utilization rate of fiber as well as the flexibility and the compatibility of the system.

### Brief Description of the Drawings

The accompanying drawings described here are provided for a better understanding of the invention and constitute one part of the invention, and the exemplary embodiments of the invention and description thereof are illustrative of the invention but are not to be construed as limiting the invention. In the accompanying drawings:
Fig. 1 is a flowchart illustrating a method for mapping data in an optical transport network according to an embodiment of the present invention;
Fig. 2 is a block diagram illustrating a structure of a device for mapping data in an optical transport network according to an embodiment of the present invention;
Fig. 3 is a block diagram illustrating a structure of a device for mapping data in an optical transport network according to a preferred embodiment of the present invention;
Fig. 4 is a schematic diagram illustrating a multiplexing architecture of an extended optical transport network according to a first embodiment of the present invention;
Fig. 5 is a schematic diagram illustrating a mapping and multiplexing flow of ODUS-OTUS-OChS according to a second embodiment of the present invention;
Fig. 6 is a schematic diagram illustrating a mapping and multiplexing flow of ODUS-m*(ODUSi-OTUSi-OChSi) according to a third embodiment of the present invention;
Fig. 7 is a schematic diagram illustrating a mapping and multiplexing flow of ODUS-m*(ODUSi-OTUSi-OChSi) according to a fourth embodiment of the present invention; and
Fig. 8 is a schematic diagram illustrating a mapping and multiplexing flow of ODUS-m*(OTUSi-OChSi) according to a fifth embodiment of the present invention.

### Detailed Description of the Embodiments

The invention is described below in detail with reference to accompanying drawings when read in conjunction with embodiments. It should be noted that embodiments of the invention and the features thereof can be combined with each other if no conflict is caused.

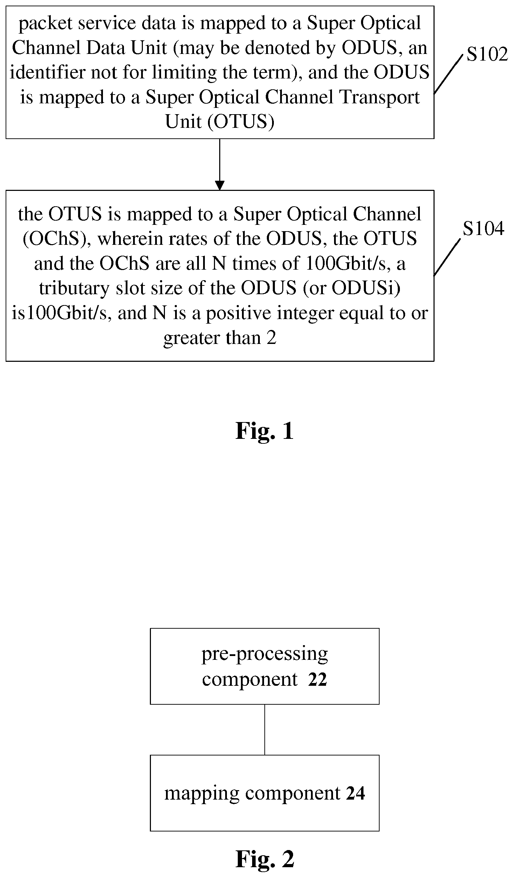

According to an embodiment of the present invention, a method for mapping data in an optical transport network is provided. Fig. 1 is a flowchart illustrating a method for mapping data in an optical transport network according to an embodiment of the invention, and as shown in Fig. 1, the flow includes the following steps:
step S102: packet service data is mapped to a Super Optical Channel Data Unit (may be denoted by ODUS, an identifier not for limiting the term), and the ODUS is mapped to a Super Optical Channel Transport Unit (OTUS); and
step S104: the OTUS is mapped to a Super Optical Channel (OChS), wherein rates of the ODUS, the OTUS and the OChS are all N times of 100Gbit/s, a tributary slot size of the ODUS (or ODUSi) is 100Gbit/s, and N is a positive integer equal to or greater than 2.

By performing the foregoing steps, the packet service data is mapped to the ODUS the rate of which is twice or more times of 100Gbit/s, the ODUS is mapped to the OTUS and the OTUS is mapped to the OChS, so that the problem that how to effectively plan and manage frequency spectrum after a flexible grid technology is introduced in the related art is solved, thus enabling an operator to deploy a beyond-100G optical transmission system more flexibly without being limited to select a fixed rate for the beyond-100G transmission and improving the spectrum utilization rate of fiber as well as the flexibility and the compatibility of the system.

It should be noted that the ODUS, the OTUS and the OChS here have a flexible super rate.

The tributary slot size of the ODUS (or ODUSi) is 100Gbit/s, thus reducing the power consumption of hardware or chips. Compared to the tributary slot size with 1.25Gbit/s, the above method requires for less hardware resources

Preferably, in Step S102, an ODU4 (that is, an optical channel data unit the rate level of which is 100Gbit/s), which bears a low-order optical channel data unit (ODUk) or packet service data, and a low-order super optical channel data unit (may be denoted by ODUS(L)) bearing packet service data are multiplexed jointly to a high-order super optical channel data unit (may be denoted by ODUS(H)), wherein the ODUk includes at least one of: an ODUO, an ODU1, an ODU2, an ODU2e, an ODU3 and an ODUflex; and the high-order ODUS is mapped to an OTUS. The ODUS(L) or the ODUS(H) is an ODUS. The method enables the introduced new flexible grid technology to be compatible to old technologies, and the operability is high and a frequency spectrum is planed rationally.

For example, in the implementation process, mapping the ODUS to the OTUS in Step S102 may include: inversely multiplexing the ODUS (or ODUS(H)) into a plurality of (more than 2) ODUSi; and mapping the plurality of ODUSi into corresponding OTUSi, respectively. Sequentially, in Step S104, the OTUSi are mapped to corresponding OChSi, wherein rates of the ODUSi, the OTUSi and the OChSi are all M times of 100Gbit/s, i is a positive integer (i=1, 2, 3, ...), and M is a positive integer equal to and greater than 1 but smaller than N. The overhead byte of each of the ODUSi includes the number of the data slice born, wherein the number is for a data receiving terminal to align and reassemble the data of the ODUS. After Step S104, the data in each of the OChSi is born on certain contiguous frequency slots for transmission. Preferably, rate levels of the ODUSi are all the same or all different.

In addition, mapping the ODUS to the OTUS in Step S102 may include: directly inversely multiplexing the ODUS into a plurality of (more than 2) OTUSi. Sequentially, in Step S104, the plurality of OTUSi are mapped to corresponding OChSi, wherein rates of the OTUSi and the OChSi are all M times of 100Gbit/s, i is a positive integer (i=1, 2, 3, ...), and M is a positive integer equal to and greater than 1 but smaller than N. The overhead bytes of each of the OTUSi include the number of the data slice born, wherein the number is for a data receiving terminal to align and reassemble the data of the ODUS. After Step S104, the data in each of the OChSi is born on certain contiguous frequency slots for transmission. Preferably, rate levels of the OTUSi are all the same or all different.

In the preferred embodiments, the ODUS (or ODUS(H)) may be multiplexed into a plurality of ODUSi and transmitted using corresponding OTUSi and OChSi, or the ODUS (or ODUS(H)) may be multiplexed into a plurality of OTUSi and then transmitted using the OTUSi and the OChSi. By using either of the methods, the data in the multiplexed ODUS may be respectively modulated on optical carriers for transmission, which improves the accuracy and the safety of a system while making full use of the available discrete frequency spectrum resource of fiber. It should be noted that a de-multiplexing operation needs to be implemented in a receiving terminal in a similar way.

After Step S104, the OChS may be modulated on a single optical carrier or multiple optical carriers for transmission.

A device for mapping data in an optical transport network, which is corresponding to the foregoing method, is provided in an embodiment of the present invention. Fig. 2 is a block diagram illustrating a structure of a device for mapping data in an optical transport network according to an embodiment of the invention, and as shown in Fig. 2, the device includes: a pre-processing component 22 configured to map packet service data to an ODUS; and a mapping component 24 coupled with the pre-processing component 22 and configured to map the ODUS to an OTUS and map the OTUS to an OChS, wherein rates of the ODUS, the OTUS and the OChS are all N times of 100Gbit/s, a tributary slot size of the ODUS is 100Gbit/s, and N is a positive integer equal to or greater than 2.

In the present embodiment, the pre-processing component 22 maps the packet service data to the ODUS the rate of which is 2 or more times of 100Gbit/s, and the mapping component 24 maps the ODUS to the OTUS and maps the OTUS to the OChS, so that the problem that how to effectively plan and manage frequency spectrum after a flexible grid technology is introduced in the related art is solved, enabling an operator to deploy a beyond-100G optical transmission system more flexibly without being limited to select a fixed rate for the beyond-100G transmission and improving the spectrum utilization rate of fiber as well as the flexibility and the compatibility of the system.

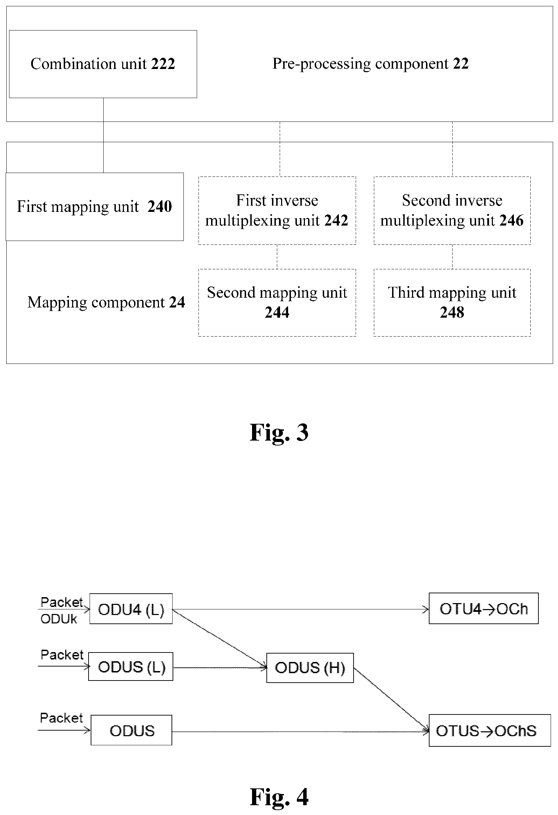

Fig. 3 is a block diagram illustrating a structure of a device for mapping data in an optical transport network according to a preferred embodiment of the invention, and as shown in Fig. 3, the pre-processing component 22 includes: a combination unit 222 configured to multiplex an ODU4, which bears a low-order optical channel data unit (ODUk) or packet service data, and a low-order ODUS (ODUS(L)) bearing packet service data into a high-order ODUS (ODUS(H)), wherein the ODUk at least includes one of: an ODUO, an ODU1, an ODU2, an ODU2e, an ODU3 and an ODUflex; and the mapping component 24 includes: a first mapping unit 240 coupled with the combination unit 222 and configured to map the ODUS(H) to an OTUS and map the OTUS to an OChS.

Preferably, the mapping component 24 further includes: a first inverse multiplexing unit 242 coupled with the pre-processing component 22 and configured to inversely multiplex the ODUS into a plurality of super optical channel data units (may be denoted by ODUSi); and a second mapping unit 244 coupled with the first inverse multiplexing unit 242 and configured to map the ODUSi into corresponding OTUSi and map the OTUSi to corresponding OChSi, wherein rates of the ODUSi, the OTUSi and the OChSi are all M times of 100Gbit/s, i is a positive integer, and M is a positive integer equal to and greater than 1 but smaller than N. Overhead bytes of each of the ODUSi includes the number of the data slice born, wherein the number is for a data receiving terminal to align and reassemble the data of the ODUS.

Preferably, the mapping component 24 further includes: a second inverse multiplexing unit 246 coupled with the pre-processing component 22 and configured to directly inversely multiplex the ODUS into a plurality of super optical channel transport unit (OTUSi); and a third mapping unit 248 coupled with the second inverse multiplexing unit 246 and configured to map the OTUSi to corresponding OChSi, wherein rates of the OTUSi and the OChSi are both M times of 100Gbit/s, i is a positive integer, and M is a positive integer equal to and greater than 1 but smaller than N. For example, overhead bytes of each of the OTUSi includes the number of the data slice born, wherein the number is for a data receiving terminal to align and reassemble the data of the ODUS.

The implementation of the foregoing embodiments is described below in detail with reference to accompanying drawings when read in conjunction with preferred embodiments.

### Embodiment 1

Rather than select a fixed bit rate for an Ethernet and an Optical Transport Network (OTN), a method and data for mapping data provided in the present embodiment may extend an architecture of an OTN, and provide a Super Optical Channel Data Unit (ODUS) with a flexible super rate. Instead of adopting a method of selecting a fixed bit rate for the next-generation optical transport network, the embodiment of the present invention selects a flexible bit rate to enable an operator and a device manufacturer to make better use of advanced hardware capacity. For example, in the aspect of the hardware of an optical transport network, a modulator may be programmed using software to enable modulation schemes, no matter modulation depth or optical carrier number, to be selected flexibly so that a bit rate and a frequency spectrum occupying a bandwidth is optimized for a specific optical transmission distance. The flexibility provided in the embodiment may be utilized in a network planning stage or after a network is deployed. Therefore, by means of the method and device mapping data provided herein for beyond-100G data transmission, an operator may deploy a beyond-100G system more flexibly.

Compared with the case where one or more fixed bit rates (e.g. an ODU5 having a rate of 400Gbit/s; an ODU 6 having a rate of 1Tbit/s) is selected for the next-generation OTN technology, the architecture of the OTN is extended in the embodiment. Fig. 4 is a schematic diagram illustrating a multiplexing architecture of an extended optical transport network according to a first embodiment of the present invention, and as shown in Fig. 4, a flexible Super Optical Channel Data Unit (ODUS) the rate of which is N times of 100Gbit/s is defined, wherein N is an integer equal to or greater than 2. First, the ODUS is mapped to a Super Optical Channel Transport Unit (OTUS) and the OTUS is born by a Super Optical Channel (OChS). That is, the mapping and multiplexing structure is ODUS-OTUS-OChS.

Preferably, a tributary slot size of 100Gbit/s may be selected for the ODUS in the embodiment so that the complexity of hardware is lowered and the area and the power consumption of a chip are reduced when compared with the case where a tributary slot size of 1.25Gbit/s or 10Gbit/s is adopted. In the implementation process, an ODUS the tributary slot size of which is 100Gbit/s may bear a packet service directly or through a Generic Framing Procedure (GFP), that is, packet may be directly mapped to the ODUS, or an ODU4 bearing an ODUO, an ODU1, an ODU2, an ODU3 or an ODUflex, and a low-order ODUS(L) bearing a packet are mapped to a high-lower ODUS(H). For example, two ODU4 (total 200Gbit/s) bearing a low-order signal (ODU0, ODU1, ODU2, ODU3, ODUflex) or a packet service, and a low-order ODUS(L) bearing a 200G packet service are multiplexed to a 400G high-order ODUS(H). First, the original OTN rate container ODUk (k=0, 1, 2, 2e, 3, flex) must be mapped to the ODU 4 first, then the ODU 4 is mapped to the ODUS.

In the implementation process, an OChS signal may be modulated to one or more optical carriers. OChS signals modulated in the two ways may be deemed as a single optical signal born on a single central frequency slot. From the point of view of architecture, a single-carrier modulation scheme and a multi-carrier modulation scheme which use contiguous single frequency slots should not be differentially used by a system. The bandwidth of the ODUS may be flexibly adjusted by increasing or decreasing the number of the optical carriers in a frequency slot, that is, by adjusting a frequency slot and modifying a modulation scheme using software.

Based on the ODUS-OTUS-OChS structure described in the foregoing embodiment, fiber is required to have contiguous frequency spectrum resources to support the direct mapping of the ODUS to a single OChS signal, however, if fiber maynot provide a contiguous frequency slot that is wide enough to bear the capacity of the ODUS, then the method provided herein which may achieve a high frequency spectrum utilization rate may be adopted. Preferably, in the embodiment, an ODUS may be mapped to a plurality of ODUSi (i is the number of an ODUSi) through inverse multiplexing, and each of the ODUSi is mapped to each of the OTUSi (i is the number of an OTUS). The overhead byte of the ODUSi must provide extra information to permit the bit streams of the ODUS to be aligned and reassembled at a receiving terminal. Each of the OTUSi is mapped to each of the OChSi (i is the number of the OChSi), and each OChSi signal is born by certain contiguous frequency slots. That is, the mapping and multiplexing structure is m*(ODUSi-OTUSi-OChSi), wherein m is equal to and greater than 2. In the preferred embodiment, an ODUS may be born on a plurality of non-contiguous frequency slots, thus improving the utilization rate of frequency spectrum. The overhead byte of each of the ODUSi includes the number of the data slice born so that bit streams of the ODUS may be aligned and reassembled at a receiving terminal.

The rate of the ODUSi is n times of 100Gbit/s, and n is equal to or greater than 1. The simplest approach is to require all the ODUSi to adopt the same rate level. Alternatively, the ODUSi may adopt different rate levels so as to make full use of the fragmentation resource of frequency spectrum.

As the ODUSi and the OTUSi are always in a one-to-one correspondence relationship, some overhead bytes may be transferred from the ODUSi to the OTUSi, for example, the overhead byte in the ODUSi for supporting the alignment and reassembly of ODUS signals may be transferred into the OTUSi. In this way, the inverse multiplexing may be optimized to leave out the ODUSi. Preferably, in the implementation process of the embodiment, an ODUS may be inversely multiplexed into a plurality of OTUSi (i is the number of an OTUSi). The overhead byte of the OTUSi must provide extra information to permit the bit streams of the ODUS to be aligned and reassembled at a receiving terminal. Each of the OTUSi are mapped to each of the OChSi (i is the number of the OChSi), and each OChSi signal is born by certain contiguous frequency slots. That is, In the preferred embodiment, an ODUS may be born on a plurality of non-contiguous frequency slots, meanwhile, the multiplexing and mapping structure ODUS-m*(OTUSi-OChSi) may be optimized further. The overhead byte of each of the OTUSi includes the number of the data slice born so that bit streams of the ODUS may be aligned and reassembled at a receiving terminal.

### Embodiment 2

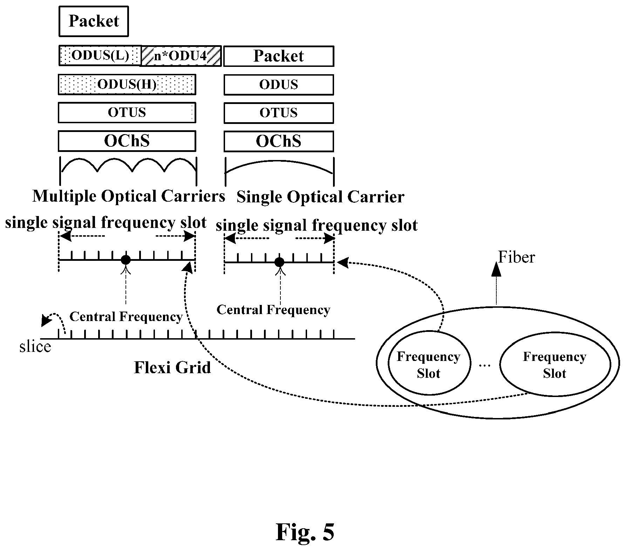

A method and a device for mapping data in a beyond-100G optical transport network are provided in an embodiment, the method is described below by taking the mapping of two ODU4 (total rate: 400Gbit/s) bearing a low-order signal (e.g. an ODUO, an ODU1, an ODU2, an ODU2e, an ODU3, an ODUflex) or a packet service, and a 200Gbit/s packet service to a low-order ODUS as an example, wherein the bit rate of the ODUS is 400Gbit/s. Fig. 5 is a schematic diagram illustrating the mapping and multiplexing flow of ODUS-OTUS-OChS according to a second embodiment of the invention, and as shown in Fig. 5, the flow includes the following steps.

Step S501: a packet service (e.g. 200Gbit/s) is mapped to a low-order Super Optical Channel Data Unit (ODUS(L)) directly or through GFP encapsulation.

Step S502: a low-order Optical Chanel Data Unit (ODUk, k=0, 1, 2, 2e, 3, flex) or a packet service with 100Gbit/s is mapped to an ODU4.

Specifically, if the bandwidth needed by the packet service is just the rate level of the ODUS, then the ODUS is wholly used to bear the packet service.

Step S503: two ODU4 bearing a low-order signal (e.g. an ODUO, an ODU1, an ODU2, an ODU2e, an ODU3, an ODUflex) or a packet service, and the low-order ODUS(L) bearing a packet service with 200Gbit/s are multiplexed to a higher-order ODUS together.

Step S504: the Super Optical Channel Data unit (ODUS) is mapped to the Super Optical Channel Transport unit (OTUS).

Step S505: the OTUS is mapped to a Super Optical Channels (OChS) which is modulated on a single optical carrier or multiple optical carriers for transmission.

### Embodiment 3

When available contiguous frequency spectrums are insufficient for supporting an OChS signal, the ODUS is inversely multiplexed into two or more ODUSi containers first. The overhead byte of the ODUSi must provide extra information for permitting the bit streams of the ODUS to be aligned and reassembled at a receiving terminal; in consideration of a deployed 100Gbit/s system, the modularity of an inverse multiplexing scheme may be progressively increased according to a granularity of 100Gbit/s, that is, the rate of the ODUSi is n times of 100Gbit/s, wherein n is equal to or greater than 1. The simplest approach is to require all the ODUSi to adopt the same rate level, this approach is compatible with existing 50GHz fixed grid and the requirements on the design of a 100G system. For example, an ODUS the bit rate of which is 1Tbit/s may be inversely multiplexed into 10 ODUSi each of which has a bit rate of 100Gbit/s, and each of the OChSi is supported by a 50GHz fixed grid.

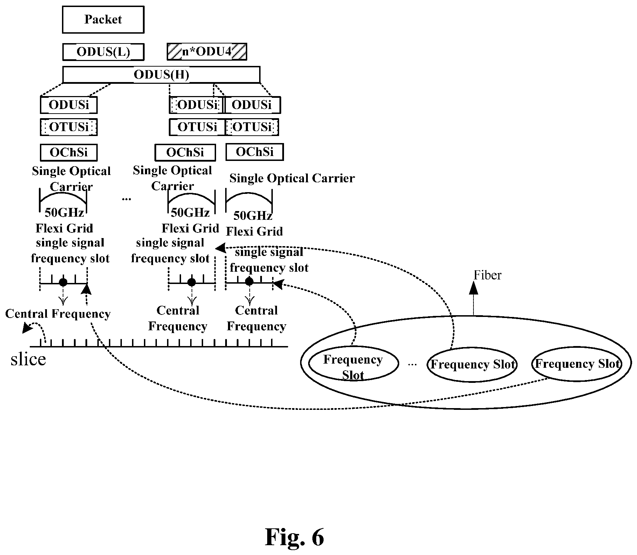

Fig. 6 is a schematic diagram illustrating the mapping and multiplexing flow of ODUS-m*(ODUSi-OTUSi-OChSi) according to a third embodiment of the invention in which each of the ODUSi has the same bit rate and the same spectrum width (e.g. 50GHz), and as shown in Fig. 6, the flow includes the following steps.

Step S601: a packet service is mapped to a low-order ODUS(L) directly or through GFP encapsulation.

Step S602: an ODUk (k=0, 1, 2, 2e, 3, flex) or a packet service with 100Gbit/s is mapped to the ODU4.

Specifically, if the bandwidth needed by the packet service is just the rate level of the ODUS, then the ODUS is wholly used to bear the packet service.

Step S603: ODU4 bearing a low-order signal (e.g. an ODUO, an ODU1, an ODU2, an ODU2e, an ODU3, an ODUflex) or a packet service, and a low-order ODUS(L) bearing a packet service are multiplexed to a higher-order ODUS(H) together. For example, eight ODU4 bearing a low-order signal (e.g. an ODUO, an ODU1, an ODU2, an ODU2e, an ODU3, an ODUflex) or a packet service, and one ODUS(L) bearing a 200Gbit/s packet service are multiplexed to a higher-order ODUS(H) together, wherein the bit rate of the ODUS(H) is 1Tbit/s. Alternatively, a born 1Tbit/s packet service is directly mapped to the ODUS.

Step S604: the ODUS is inversely multiplexed into a plurality of ODUSi, for example, a 400Gbit/s ODUS is mapped to four ODUSi, that is, an ODUS frame is divided into four fragments, and each fragment is mapped to a ODUSi a bit rate of which is 100Gbit/s, or a ODUS a bit rate of which is 1Tbit/s is inversely multiplexed into ten ODUSi, that is, an ODUS frame is divided into ten fragments, and each fragment is mapped to a ODUSi a bit rate of which is 100Gbit/s. The overhead byte of each of the ODUSi includes the corresponding ODUSi number so that bit streams of the ODUS may be aligned and reassembled at a receiving terminal. If each of the ODUSi needs a frequency spectrum resource of 50GHz, then the transmission of 1Tbit/s data needs a frequency spectrum resource of 50GHz.

Step S605: the ODUSi are mapped to OTUSi.

Step S606: the OTUSi are mapped to OChSi which may be modulated on a single optical carrier or multiple optical carriers for transmission.

### Embodiment 4

According to the method of embodiment 3, an ODUS is required to be inversely multiplexed into a plurality of ODUSi, wherein a bit rate of each of ODUSi is 100Gbit/s and each of ODUSi is supported by a 50GHz fixed grid. This method is incapable of effectively making full use of available frequency spectrum resource. For example, as the maximum available contiguous frequency spectrums of fiber may only bear a 400Gbit/s signal, an ODUS a bit rate of which is 1Tbit/s may be inversely multiplexed to three ODUSi, including two ODUSi which both occupy 100GHz frequency spectrum and bit rates of which are 100Gbit/s, and one ODUSi which occupies 75GHz frequency spectrum and a bit rate of which are 200Gbit/s, the one ODUS totally occupying 275GHz frequency spectrum resource. If a 1Tbit/s ODUS is simply inversely multiplexed into ten ODUSi each of which occupies 50GHz frequency spectrum and bit rates of which are 100Gbit/s, then the ODUS will totally occupy 500GHz frequency spectrum resource, which leads to a low spectrum utilization rate. The method provided in the embodiment may greatly improve spectrum efficiency.

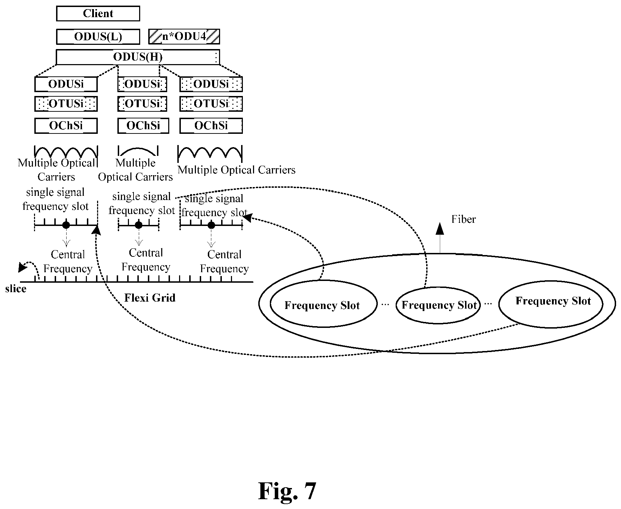

Fig. 7 is a schematic diagram illustrating the mapping and multiplexing flow of ODUS-m*(ODUSi-OTUSi-OChSi) according to a fourth embodiment of the present invention in which the ODUSi all have different bit rates and different spectrum widths, and as shown in Fig. 7, the flow includes the following steps.

Step S701: a packet service is mapped to a low-order ODUS(L) directly or through GFP encapsulation.

Step S702: a low-order ODUk (k=0, 1, 2, 2e, 3, flex) or a 100Gbit/s packet service is mapped to an ODU4.

Specifically, if the bandwidth needed by the packet service is just the rate level of the ODUS, then the ODUS is wholly used to bear the packet service.

Step S703: the ODU4 bearing a low-order signal (e.g. an ODUO, an ODU1, an ODU2, an ODU2e, an ODU3, an ODUflex) or a packet service, and a low-order ODUS(L) bearing a packet service are multiplexed to a higher-order ODUS(H) together. For example, as the maximum available contiguous frequency spectrums of fiber may only bear a 400Gbit/s signal, an ODUS the bit rate of which is 1Tbit/s may be inversely multiplexed to three ODUSi, including two ODUSi which both occupy 100GHz frequency spectrum and bit rates of which are 400Gbit/s, and one ODUSi which occupies 75GHz frequency spectrum and a bit rate of which is 200Gbit/s, the ODUS totally occupying 275GHz frequency spectrum resource.

Step S704: the ODUS is inversely multiplexed into a plurality of ODUSi, and the overhead byte of each of the ODUSi includes the number of the data slice born so that the bit streams of the ODUS is aligned and reassembled at a receiving terminal.

Step S705: the ODUSi are mapped to OTUSi.

Step S706: the OTUSi are mapped to OChSi which may be modulated on a single optical carrier or multiple optical carriers for transmission. In the embodiment, bit rates of two ODUSi are both 400Gbit/s, and corresponding OChSi are transmitted through four optical carriers, and the bit rate of the other ODUSi is 200Gbit/s, and the OChSi corresponding to the other ODUSi is born on an optical carrier.

### Embodiment 5

As the ODUSi and the OTUSi are always in a one-to-one correspondence relationship, some overhead bytes may be transferred from the ODUSi to the OTUSi, for example, the overhead byte in the ODUSi for supporting the alignment and reassembly of ODUS signals may be transferred into the OTUSi. In this way, the inverse multiplexing architecture may be optimized to leave out the ODUSi.

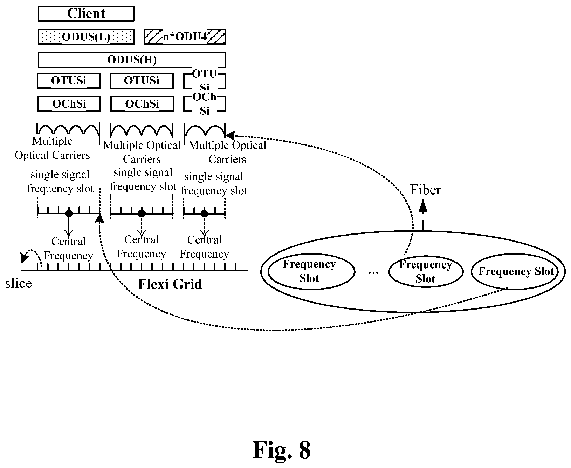

Fig. 8 is a schematic diagram illustrating the mapping and multiplexing flow of ODUS-m*(OTUSi-OChSi) according to a fifth embodiment of the invention in which the ODUSi all have the same or different bit rates and the same or different spectrum widths, and as shown in Fig. 8, the flow includes the following steps:
Step S801: a packet service is mapped to a low-order ODUS(L) directly or through GFP encapsulation.
Step S802: an ODUk (k=0, 1, 2, 2e, 3, flex) or a packet service is mapped to an ODU4.
Step S803: a plurality of ODU4 bearing a low-order signal (e.g. an ODUO, an ODU1, an ODU2, an ODU2e, an ODU3, an ODUflex) or a packet service, and an ODUS(L) bearing a packet service are multiplexed to a higher-order ODUS together.
Step S804: the ODUS is inversely multiplexed into a plurality of OTUSi, for example, a ODUS signal a bit rate of which is 1Tbit/s may be inversely multiplexed into three OTUSi, including two ODUSi which both occupy 100GHz frequency spectrum and bit rates of which are 400Gbit/s, and one ODUSi which occupies 75GHz frequency spectrum and a bit rate of which is 200Gbit/s, the one ODUSi totally occupying 275GHz frequency spectrum resource. The overhead byte of each of the OTUSi includes the corresponding OTUSi number so that bit streams of the ODUS can be aligned and reassembled at a receiving terminal.
Step S805: the OTUSi are mapped to OChSi which may be modulated on a single optical carrier or multiple optical carriers for transmission.

To sum up, a method and a device for the beyond-100G data transmission of an optical transport network are provided in the invention which free the next-generation optical transport network from the limitation to a fixed rate and improve the spectrum utilization rate of fiber to provide a flexible evolution method for the-next generation optical transport network.

Apparently, it should be appreciated by those skilled in the art that each component or step described in the invention can be realized by a universal computer and that the components or steps may be integrated on a single computer or distributed on a network consisting of a plurality of computers, optionally, the components or steps may be realized by executable program codes so that the components or steps can be stored in a memory to be executed by a computer, and in some cases, the steps shown or described herein can be executed in a sequence different from this presented herein, or the components or steps are formed into integrated circuit components, or several of the components or steps are formed into integrated circuit components. Therefore, the invention is not limited to the combination of specific hardware and software.Therefore, the invention is not limited to the combination of specific hardware and software.

The mentioned above is only preferred embodiments of the invention but not limitation to the invention, it should be appreciated that various modification and variations can be devised by those of ordinary skill in the art.Any modification, substitute or improvement devised without departing from the scope of the invention should fall within the protection range of the invention.

## Claims

1. A method for mapping data in an optical transport network, **characterized by** comprising:
mapping packet service data to a Super Optical Data Unit, ODUS, and mapping the ODUS to a Super Optical Transport Unit, OTUS, (S102); and
mapping the OTUS to a Super Optical Channel, OChS;
wherein rates of the ODUS, the OTUS and the OChS are all N times of 100Gbit/s, a tributary slot size of the ODUS is 100Gbit/s, and N is a positive integer equal to or greater than 2 (S104).

2. The method according to claim 1, **characterized in that** mapping the packet service data to the ODUS and mapping the ODUS to the OTUS comprises:
multiplexing an ODU4 bearing a low-order Optical Channel Data Unit, ODUk, or the packet service data, and the ODUS which is low-order and bears the packet service data into the ODUS which is high-order, wherein the ODUk includes at least one of: an ODUO, an ODU1, an ODU2, an ODU2e, an ODU3 and an ODUflex; and
mapping the high-order ODUS to the OTUS.

3. The method according to claim 1, **characterized in that** mapping the ODUS to the OTUS and mapping the OTUS to the OChS comprises:
inversely multiplexing the ODUS into a plurality of Super Optical Channel Data Units, ODUSi;
mapping the ODUSi into corresponding Super Optical Channel Transport Units (OTUSi) respectively; and mapping the OTUSi into corresponding Super Optical Channels, OChSi,
wherein rates of the ODUSi, the OTUSi and the OChSi are all M times of 100Gbit/s, i is a positive integer, and M is a positive integer equal to and greater than 1 but smaller than N.

4. The method according to claim 3, **characterized in that** a overhead byte of each of the ODUSi includes a corresponding ODUSi number, wherein the number is for a receiving terminal to align and reassemble data of the ODUS.

5. The method according to claim 3, **characterized in that** rate levels of the ODUSi are all the same or all different.

6. The method according to claim 1, **characterized in that** mapping the ODUS to the OTUS and mapping the OTUS to the OChS comprises:
directly inversely multiplexing the ODUS into a plurality of OTUSi; and
mapping the OTUSi into corresponding OChSi;
wherein rates of the OTUSi and the OChSi are both M times of 100Gbit/s, i is a positive integer, and M is a positive integer equal to and greater than 1 but smaller than N.

7. The method according to claim 6, **characterized in that** a overhead byte of each of the OTUSi includes a corresponding OTUSi number, wherein the number is for a receiving terminal to align and reassemble data of the ODUS.

8. The method according to claim 6, **characterized in that** rate levels of the OTUSi are all the same or all different.

9. The method according to claim 3 or 6, **characterized in that** after the OTUSi are mapped to the OChSi, the method further comprises:
bearing data in each of the OChSi on certain contiguous frequency slots for transmission.

10. The method according to claim 1, **characterized in that** after the OTUS is mapped to the OChS, the method further comprises:
modulating the OChS on a single optical carrier or multiple optical carriers for transmission.

11. A device for mapping data in an optical transport network, **characterized by** comprising:
a pre-processing component (22) configured to map packet service data to a Super Optical Channel Data Unit (ODUS); and
a mapping component (24) configured to map the ODUS to a Super Optical Channel Transport Unit, OTUS, and map the OTUS to a Super Optical Channel,OChS,
wherein rates of the ODUS, the OTUS and the OChS are all N times of 100Gbit/s, a tributary slot size of the ODUS is 100Gbit/s, and N is a positive integer equal to or greater than 2.

12. The device according to claim 11, **characterized in that**
the pre-processing component (22) comprises a combination unit (222) configured to multiplex an ODU4 bearing a low-order Optical Channel Data Unit, ODUk, or the packet service data, and the ODUS which is low-order and bears the packet service data into an ODUS which is high-order, wherein the ODUk includes at least one of: an ODUO, an ODU1, an ODU2, an ODU2e, an ODU3 and an ODUflex; and
the mapping component (24) comprises a first mapping unit (240) configured to map the high-order ODUS to the OTUS and map the OTUS to the OChS.

13. The device according to claim 11, **characterized in that** the mapping component (24) further comprises:
a first inverse multiplexing unit (242) configured to inversely multiplex the ODUS into a plurality of Super Optical Channel Data Units, ODUSi; and
a second mapping unit (246) configured to map the ODUSi into corresponding OTUSi and map the OTUSi to corresponding Super Optical Channels , OChSi,
wherein rates of the ODUSi, the OTUSi and the OChSi are all M times of 100Gbit/s, i is a positive integer, and M is a positive integer equal to and greater than 1 but smaller than N.

14. The device according to claim 11, **characterized in that** the mapping component (24) further comprises:
a second inverse multiplexing unit (244) configured to directly inversely multiplex the ODUS into a plurality of OTUSi; and
a third mapping unit (248) configured to map the OTUSi to corresponding OChSi, wherein
rates of the OTUSi and the OChSi are both M times of 100Gbit/s, i is a positive integer, and M is a positive integer equal to and greater than 1 but smaller than N.

## Patentansprüche

1. Verfahren zum Abbilden von Daten in einem optischen Transportnetz, **dadurch gekennzeichnet, dass** es umfasst:
Abbilden von Paketdienstdaten auf eine Super Optical Data Unit (ODUS) und Abbilden der ODUS auf eine Super Optical Transport Unit (OTUS) (S102); und
Abbilden der OTUS auf einen Super Optical Channel (OChS);
wobei die Raten der ODUS, der OTUS und des OChS alle N-Fache von 100 Gbit/s betragen, eine Größe eines Tributary Slot der ODUS 100 Gbit/s beträgt und N eine positive ganze Zahl gleich oder größer als 2 ist (S104).

2. Verfahren nach Anspruch 1, **dadurch gekennzeichnet, dass** das Abbilden der Paketdienstdaten auf der ODUS und das Abbilden der ODUS auf der OTUS umfasst:
Multiplexen einer ODU4, die eine Optical Channel Data Unit (ODUk) niedriger Ordnung oder die Paketdienstdaten transportiert, und der ODUS, die von niedriger Ordnung ist und die Paketdienstdaten trägt, in die ODUS, die von hoher Ordnung ist, wobei die ODUk mindestens eines beinhaltet aus: einer ODUO, einer ODU1, einer ODU2, einer ODU2e, einer ODU3 und einer ODUflex; und
Abbilden der ODUS höherer Ordnung auf die OTUS.

3. Verfahren nach Anspruch 1, **dadurch gekennzeichnet, dass** das Abbilden der ODUS auf die OTUS und das Abbilden der OTUS auf den OChS umfasst:
inverses Multiplexen der ODUS in eine Vielzahl von Super Optical Channel Data Units (ODUSi);
jeweils Abbilden der ODUSi in entsprechende Super Optical Channel Transport Units (OTUSi); und Abbilden der OTUSi in entsprechende Super Optical Channels (OChSi),
wobei die Raten der ODUSi, der OTUSi und der OChSi alle M-Fache von 100 Gbit/s betragen, i eine positive ganze Zahl ist und M eine positive ganze Zahl ist, die gleich und größer als 1, aber kleiner als N ist.

4. Verfahren nach Anspruch 3, **dadurch gekennzeichnet, dass** ein Verwaltungsbyte einer jeden der ODUSi eine entsprechende ODUSi-Nummer beinhaltet, wobei die Nummer einem empfangenden Endgerät dazu dient, Daten der ODUS auszurichten und wieder zusammenzusetzen.

5. Verfahren nach Anspruch 3, **dadurch gekennzeichnet, dass** die Ratenpegel der ODUSi alle gleich oder alle verschieden sind.

6. Verfahren nach Anspruch 1, **dadurch gekennzeichnet, dass** das Abbilden der ODUS auf die OTUS und das Abbilden der OTUS auf den OChS umfasst:
direktes inverses Multiplexen der ODUS in eine Vielzahl von OTUSi; und
Abbilden der OTUSi in entsprechende OChSi;
wobei die Raten der OTUSi und der OChSi beide M-Fache von 100 Gbit/s betragen, i eine positive ganze Zahl ist und M eine positive ganze Zahl ist, die gleich und größer als 1, aber kleiner als N ist.

7. Verfahren nach Anspruch 6, **dadurch gekennzeichnet, dass** ein Verwaltungsbyte einer jeden der OTUSi eine entsprechende OTUSi-Nummer beinhaltet, wobei die Nummer einem empfangenden Endgerät dazu dient, Daten der ODUS auszurichten und wieder zusammenzusetzen.

8. Verfahren nach Anspruch 6, **dadurch gekennzeichnet, dass** die Ratenpegel der OTUSi alle gleich oder alle verschieden sind.

9. Verfahren nach Anspruch 3 oder 6, **dadurch gekennzeichnet, dass** das Verfahren nach der Abbildung der OTUSi auf die OChSi ferner umfasst:
Transportieren von Daten in jedem der OChSi auf bestimmten benachbarten Frequenzsegmenten zur Übertragung.

10. Verfahren nach Anspruch 1, **dadurch gekennzeichnet, dass** das Verfahren nach der Abbildung der OTUS auf den OChS ferner umfasst:
Modulieren des OChS auf einem einzigen optischen Träger oder mehreren optischen Trägern zur Übertragung.

11. Vorrichtung zum Abbilden von Daten in einem optischen Transportnetz, **dadurch gekennzeichnet, dass** sie umfasst:
eine Vorverarbeitungskomponente (22), die konfiguriert ist, um Paketdienstdaten auf eine Super Optical Channel Data Unit (ODUS) abzubilden; und
eine Abbildungskomponente (24), die konfiguriert ist, um die ODUS auf einer Super Optical Channel Transport Unit (OTUS) abzubilden und die OTUS auf einen Super Optical Channel (OChS) abzubilden,
wobei die Raten der ODUS, der OTUS und des OChS alle N-Fache von 100 Gbit/s betragen, eine Größe eines Tributary Slot der ODUS 100 Gbit/s beträgt und N eine positive ganze Zahl gleich oder größer als 2 ist.

12. Vorrichtung nach Anspruch 11, **dadurch gekennzeichnet, dass**
die Vorverarbeitungskomponente (22) eine Kombinationseinheit (222) umfasst, die konfiguriert ist, um eine ODU4, die eine Optical Channel Data Unit (ODUk) niedriger Ordnung oder die Paketdienstdaten transportiert, und die ODUS, die von niedriger Ordnung ist und die Paketdienstdaten trägt, in eine ODUS zu multiplexen, die von hoher Ordnung ist, wobei die ODUk mindestens eines beinhaltet aus: einer ODUO, einer ODU1, einer ODU2, einer ODU2e, einer ODU3 und einer ODUflex; und
die Abbildungskomponente (24) eine erste Abbildungseinheit (240) umfasst, die konfiguriert ist, um die ODUS höherer Ordnung auf die OTUS abzubilden und die OTUS auf den OChS abzubilden.

13. Vorrichtung nach Anspruch 11, **dadurch gekennzeichnet, dass** die Abbildungskomponente (24) ferner umfasst:
eine erste Inversmultiplexeinheit (242), die konfiguriert ist, um die ODUS in eine Vielzahl von Super Optical Channel Data Units (ODUSi) invers zu multiplexen; und
eine zweite Abbildungseinheit (246), die konfiguriert ist, um die ODUSi in entsprechende OTUSi abzubilden und die OTUSi auf entsprechende Super Optical Channels (OChSi) abzubilden,
wobei die Raten der ODUSi, der OTUSi und der OChSi alle M-Fache von 100 Gbit/s betragen, i eine positive ganze Zahl ist und M eine positive ganze Zahl ist, die gleich und größer als 1, aber kleiner als N ist.

14. Vorrichtung nach Anspruch 11, **dadurch gekennzeichnet, dass** die Abbildungskomponente (24) ferner umfasst:
eine zweite Inversmultiplexeinheit (244), die konfiguriert ist, um die ODUS in eine Vielzahl von OTUSi direkt invers zu multiplexen; und
eine dritte Abbildungseinheit (248), die konfiguriert ist, um die OTUSi auf entsprechende OChSi abzubilden, wobei
Raten der OTUSi und der OChSi beide M-Fache von 100 Gbit/s betragen, i eine positive ganze Zahl ist und M eine positive ganze Zahl ist, die gleich und größer als 1, aber kleiner als N ist.

## Revendications

1. Procédé de mise en correspondance de données dans un réseau de transport optique, **caractérisé en ce qu'**il comprend :
la mise en correspondance de données du service de paquets avec une unité de données super-optique, ODUS, et la mise en correspondance de l'ODUS avec une unité de transport super-optique, OTUS (S102) ; et
la mise en correspondance de l'OTUS avec un canal super-optique, OChS ;
les débits d'ODUS, d'OTUS et d'OChS valant tous N fois 100 Gbits/s, une taille de créneau tributaire de l'ODUS étant de 100 Gbits/s et N est un entier positif égal ou supérieur à 2 (S104).

2. Procédé selon la revendication 1, **caractérisé en ce que** la mise en correspondance des données de service de paquets avec l'ODUS et la mise en correspondance de l'ODUS avec l'OTUS comprennent :
le multiplexage d'une unité ODU4 portant une unité de données de canal optique d'ordre inférieur, ODUk, ou les données de service de paquets, et l'ODUS qui est d'ordre inférieur et qui porte les données de service de paquets dans l'ODUS qui est d'ordre supérieur, l'ODUk comprenant : un ODUO, un ODU1, un ODU2, un ODU2e, un ODU3 et/ou un ODUflex ; et
la mise en correspondance de l'ODUS d'ordre élevé avec l'OTUS.

3. Procédé selon la revendication 1, **caractérisé en ce que** la mise en correspondance de l'ODUS avec l'OTUS et la mise en correspondance de l'OTUS avec l'OChS comprennent :
le multiplexage inverse de l'ODUS en une pluralité d'unités de données de canaux super-optiques, ODUSi ;
la mise en correspondance des ODUSi avec les unités de transport de canaux super-optiques (OTUSi) correspondantes ; et la mise en correspondance des OTUSi avec les canaux super-optiques correspondants, OChSi,
les débits des ODUSi, des OTUSi et des OChSi valant tous M fois 100 Gbit/s, i représentant un entier positif et M représentant un entier positif supérieur ou égal à 1 mais inférieur à N.

4. Procédé selon la revendication 3, **caractérisé en ce qu'**un octet d'en-tête de chacun des ODUSi comprend un numéro d'ODUSi correspondant, le numéro étant destiné à un terminal de réception pour qu'il puisse aligner et ré-assembler les données de l'ODUS.

5. Procédé selon la revendication 3, **caractérisé en ce que** les niveaux de débit des ODUSi sont tous identiques ou tous différents.

6. Procédé selon la revendication 1, **caractérisé en ce que** la mise en correspondance de l'ODUS avec l'OTUS et la mise en correspondance de l'OTUS avec l'OChS comprennent :
le multiplexage direct inverse de l'ODUS en une pluralité d'OTUSi ; et
la mise en correspondance des OTUSi avec les OChSi correspondants ;
les débits des OTUSi et des OChSi étant tous les deux M fois 100 Gbit/s, i étant un entier positif et M un entier positif supérieur ou égal à 1 mais inférieur à N.

7. Procédé selon la revendication 6, **caractérisé en ce qu'**un octet d'en-tête de chacun des OTUSi comprend un numéro d'OTUSi correspondant, le numéro étant destiné à l'alignement et au rassemblement des données de l'ODUS par un terminal de réception.

8. Procédé selon la revendication 6, **caractérisé en ce que** les niveaux de débit des OTUSi sont tous identiques ou tous différents.

9. Procédé selon la revendication 3 ou 6, **caractérisé en ce que**, une fois que les OTUSi ont été mis en correspondance avec les OChSi, le procédé comprend en outre :
le portage de données dans chacun des OChSi sur certains créneaux de fréquence contigus, pour une transmission.

10. Procédé selon la revendication 1, **caractérisé en ce qu'**après la mise en correspondance de l'OTUS avec l'OChS, le procédé comprend en outre :
la modulation de l'OChS sur une ou sur plusieurs porteuses optiques, pour une transmission.

11. Dispositif de mise en correspondance de données dans un réseau de transport optique, **caractérisé en ce qu'**il comprend :
un composant de pré-traitement (22), configuré pour mettre en correspondance des données de service de paquets vers une unité de données de canal super-optique (ODUS) ; et
un composant de mise en correspondance (24), configuré pour mettre en correspondance l'ODUS avec une unité de transport de canal super-optique, OTUS, et mettre en correspondance l'OTUS avec un canal super-optique, OChS,
les débits d'ODUS, d'OTUS et d'OChS valant tous N fois 100 Gbits/s, la taille de créneau tributaire de l'ODUS étant de 100 Gbits/s et N représentant un entier positif égal ou supérieur à 2.

12. Dispositif selon la revendication 11, **caractérisé en ce que**
le composant de pré-traitement (22) comprend une unité de combinaison (222) configurée pour multiplexer une ODU4 portant une unité de données de canal optique de faible ordre, ODUk, ou les données de service de paquets, et l'ODUS qui est de faible ordre et qui porte les données de service de paquets dans un ODUS d'ordre élevé, l'ODUk comprenant au moins l'un des éléments suivants : un ODUO, un ODU1, un ODU2, un ODU2e, un ODU3 et un ODUflex ; et
le composant de mise en correspondance (24) comprend une première unité de mise en correspondance (240), configurée pour mettre en correspondance l'ODUS d'ordre élevé avec l'OTUS et pour mettre en correspondance l'OTUS avec l'OChS.

13. Dispositif selon la revendication 11, **caractérisé en ce que** le composant de mise en correspondance (24) comprend en outre :
une première unité de multiplexage inverse (242), configurée pour multiplexer inversement l'ODUS en une pluralité d'unités de données de canaux super-optiques, ODUSi ; et
une deuxième unité de mise en correspondance (246), configurée pour mettre en correspondance les ODUSi avec les OTUSi correspondants et pour mettre en correspondance les OTUSi avec les canaux super-optiques correspondants, OChSi,
les débits des ODUSi, des OTUSi et des OChSi valant tous M fois 100 Gbit/s, i représentant un entier positif et M représentant un entier positif supérieur ou égal à 1 mais inférieur à N.

14. Dispositif selon la revendication 11, **caractérisé en ce que** le composant de mise en correspondance (24) comprend en outre :
une seconde unité de multiplexage inverse (244), configurée pour multiplexer directement de manière inverse l'ODUS en une pluralité d'OTUSi ; et
une troisième unité de mise en correspondance (248), configurée pour mettre en correspondance les OTUSi avec les OChSi correspondants,
les débits des OTUSi et des OChSi étant tous les deux M fois 100 Gbit/s, i représentant un entier positif et M représentant un entier positif égal et supérieur à 1 mais inférieur à N.
